Europäisches Patentamt

European Patent Office

Office européen des brevets

(19)

(11) Numéro de publication: **0 238 424
B1**

(12)

# FASCICULE DE BREVET EUROPEEN

(45) Date de publication du fascicule du brevet:
**18.04.90**

(51) Int. Cl.⁴: **A43D 95/06,** A43D 8/42,
B23Q 1/16

(21) Numéro de dépôt: **87420064.5**

(22) Date de dépôt: **04.03.87**

(54) **Procédé de coloration de la lisse des semelles de chaussures et dispositif pour sa mise en oeuvre.**

(30) Priorité: **05.03.86 FR 8603614**

(43) Date de publication de la demande:
**23.09.87 Bulletin 87/39**

(45) Mention de la délivrance du brevet:
**18.04.90 Bulletin 90/16**

(84) Etats contractants désignés:
**AT BE CH DE ES FR GB GR IT LI LU NL SE**

(56) Documents cités:
**CH-A- 425 521
DE-A- 2 652 015
FR-A- 2 457 129
GB-A- 719 527
GB-A- 1 114 492
US-A- 2 435 900
US-A- 3 170 374**

(73) Titulaire: **CENTRE TECHNIQUE CUIR CHAUSSURE
MAROQUINERIE, 9, avenue Jules Carteret,
F-69007 Lyon(FR)**

(72) Inventeur: **Querio, Roger, 1 Allée des Bleuets,
F-69160 Tassin La Demi-Lune(FR)**
Inventeur: **Darragon, Jerôme, Rue Lamartine Saint
André Le Gaz, F-38490 Les Abrets(FR)**

(74) Mandataire: **Maureau, Philippe et al, Cabinet Germain &
Maureau Le Britannia - Tour C 20, bld Eugène Déruelle,
F-69003 Lyon(FR)**

## Description

La présente invention a trait à la coloration de la lisse c'est-à-dire de la tranche, de semelles de chaussures.

Actuellement, cette coloration est réalisée dans des machines comprenant un galet encreur d'axe horizontal et deux galets d'entraînement, tous deux d'axes verticaux qui sont disposés au-dessus du galet encreur et à une certaine distance l'un de l'autre correspondant sensiblement à l'épaisseur de la semelle, ces galets d'entraînement coopèrant ensemble de façon à entraîner par son bord périphérique une semelle placée entre ceux-ci; la lisse de cette semelle se colore par contact avec le galet encreur au fur et à mesure de son déplacement sous l'effet des galets d'entraînement.

Ce principe d'entraînement de la semelle, le long de sa périphérie, pose des problèmes au niveau des extrémités de cette semelle qui sont plus ou moins effilées et au niveau desquelles la surface d'entraînement est plus faible. Notamment, le basculement de la semelle autour de ses extrémités s'effectue parfois difficilement, d'autant plus lorsqu'il se produit des phénomènes d'arc-boutement, et la coloration de la lisse obtenue à ce niveau n'est alors pas satisfaisante.

Il se pose en outre des problèmes d'usure des galets d'entraînement et notamment de lissage de la surface de ceux-ci, et par conséquent de mauvais entraînement des semelles.

Par le DE-A 2 652 015, on connaît un procédé et un dispositif correspondant aux préambules des revendications 1 et 4. Dans le DE-A 2 652 015, est en outre décrit un autre procédé de coloration de la lisse de semelles de chaussures du type dans lequel la lisse de la semelle devant être colorée est amenée en contact avec la surface périphérique d'un dispositif encreur rotatif. Ce procédé consiste à entraîner la semelle en un mouvement combiné de rotation et de translation, en la maintenant, dans son plan, avec son bord appliqué contre la surface périphérique du dispositif encreur.

Le dispositif pour la mise en œuvre de cet autre procédé comprend essentiellement deux mors montés rotatifs autour de deux axes orthogonaux, l'un de ces mors, dont l'axe est parallèle à celui du dispositif encreur, étant engagé derrière un rebord périphérique saillant vers le haut dont est pourvue la semelle.

Cet autre procédé et le dispositif pour sa mise en œuvre ne peuvent donc pas être utilisés pour la coloration d'une lisse de semelle non pourvue de ce rebord saillant.

Le but de la présente invention est de rémédier à ces inconvénients et de fournir un procédé de coloration des lisses de semelles et notamment un procédé d'entraînement de ces semelles par rapport au rouleau encreur, ainsi qu'un dispositif pour sa mise en œuvre qui permette une coloration uniforme de ces lisses, qui soit fiable et non susceptible de poser des problèmes d'usure.

Ce but est atteint par le procédé et le dispositif selon l'invention, telle qu'elle est caractérisée dans les revendications.

Ce procédé est basé sur l'observation qui a été faite par les inventeurs, que le centre de la semelle décrit sensiblement un cercle lorsque le bord de celle-ci déplace tangentiellement par rapport au rouleau encreur.

Grâce à ce principe d'entraînement le déplacement de la lisse par rapport au rouleau encreur s'effectue sans aucun phénomène d'arc-boutement notamment au niveau des extrémités de la semelle.

En outre le mouvement communiqué à la semelle n'impose l'entraînement que d'un seul point, toujours le même à savoir le centre de gravité de la semelle, au lieu d'une multiplicité de points comme dans la technique antérieure. Par conséquent la semelle peut être fixée dans son dispositif d'entraînement et il n'y a pas d'usure de celui-ci.

Enfin le fait que la semelle soit entraînée par son centre supprime tout problème d'entraînement au niveau des extrémités de celle-ci.

Le procédé selon l'invention consiste également à déplacer verticalement le rouleau encreur au cours déplacement de la semelle, de façon à toujours maintenir le contact entre ce rouleau et la lisse de la semelle, ce qui permet de compenser les écarts existant entre le déplacement réel et le déplacement théorique du centre de gravité de la semelle lorsque celle-ci se déplace tangentiellement au rouleau encreur.

Selon une forme de réalisation préférée, la vitesse de rotation de la semelle autour du premier axe est inférieure à la vitesse de rotation de ce premier axe par rapport au second axe et le rapport de ces deux vitesses est de préférence égal à 1/2.

De toute façon l'invention sera bien comprise et d'autres caractéristiques seront mises en évidence à l'aide de la description qui suit en référence au dessin schématique annexé illustrant à titre d'exemple non limitatif une forme de réalisation préférée d'un dispositif pour la mise en oeuvre de ce procédé de coloration de lisse.

Fig. 1 est une vue en perspective de ce dispositif,

Fig. 2 est une vue de face du dispositif de fig. 1,

Fig. 3 est un schéma illustrant les différentes positions de la semelle par rapport au rouleau encreur.

Le dispositif pour la mise en oeuvre du procédé selon la présente invention se présente essentiellement sous la forme d'un bâti 2 sur lequel sont disposés le dispositif 3 d'entraînement des semelles 1 et le dispositif 4 d'encrage de la lisse la de celles-ci.

Le dispositif d'entraînement 3 des semelles comprend deux mors 6, 7 allongés, qui sont fixés chacun à l'extrémité d'une tige respectivement 6a, 7a, ces tiges étant montées rotatives autour d'un axe commun 8 s'étendant horizontalement et passant par le centre de gravité des mors 6, 7. Le mors 6 est fixe dans la direction de l'axe 8 tandis que l'autre mors 7 peut être déplacé dans cette direction vers, ou au contraire à distance, du mors 6 pour venir serrer une semelle 1.

Le déplacement du mors "mobile" 7 est commandé par un vérin 9 dont la tige 9a est reliée au système d'entraînement en rotation de la tige 7a du mors 7 par l'intermédiaire d'une butée à billes 10, de sorte que la tige de vérin 9a reste immobile pendant la rotation du mors 7.

La tige 6a du mors 6 est montée libre en rotation à une extrémité d'une bielle d'entraînement 11. Cette bielle 11 est fixée par son autre extrémité sur un arbre 12 d'axe 12a monté rotatif dans un palier 13 du bâti 2, cet arbre 12 étant relié par son autre extrémité à l'arbre de sortie d'un moteur 15 par un dispositif d'accouplement 14 de type connu en soi.

La bielle 11 est par conséquent entraînée en rotation autour de l'axe 12a et tourne à la même vitesse que le moteur 15.

Sur l'arbre 12 de la bielle 11 est centré un pignon 16 fixé au bâti qui engrène avec un pignon intermédiaire 17 monté rotatif sur la bielle 11, celui-ci étant lui-même en prise avec un autre pignon 18 fixé sur la tige 6a du mors 6. De cette façon le mors 6 est entraîné en rotation par l'arbre 12 par l'intermédiaire de pignons 16, 17, 18. Ceux-ci sont calculés de façon à assurer une réduction de 1/2 de sorte que la vitesse de rotation du mors 6 est égale à la moitié de la vitesse de rotation de la bielle.

L'entraînement en rotation du mors 7 est réalisé de la même façon que celui du mors 6 à l'aide d'une bielle 21 fixée sur un arbre 22 et entraînée en rotation par celui-ci autour d'un axe 22a qui est confondu avec l'axe 12a, des engrenages 26, 27, 28 assurant également l'entraînement en rotation du mors 7 autour de son axe 8 par rapport à la bielle 21 avec un rapport de réduction de 1/2 par rapport à la vitesse de rotation de l'arbre 22. La seule différence réside dans le fait que l'arbre 22 de la bielle 21 n'est pas accouplé directement à l'arbre de sortie du moteur 15 mais est entraîné en rotation par celui-ci par un système de poulies 19 fixées sur les arbres 12 et 22, de courroies 20 et de poulies de renvoi d'angle 19a.

Le mors 7 tourne donc en synchronisme avec le mors 6, tous deux effectuant une rotation sur eux-même, par rapport à l'axe 8 à une vitesse w/2 et une rotation autour de leur axe commun 12a, 22a à une vitesse w.

Le dispositif 4 d'encrage de la lisse comprend essentiellement un bac 32, rempli d'encre fixé sur un chariot 37 qui est monté déplaçable verticalement et un rouleau d'encrage 30 d'axe 30a horizontal et trempant par son extrémité inférieure dans l'encre contenue dans le bac 32.

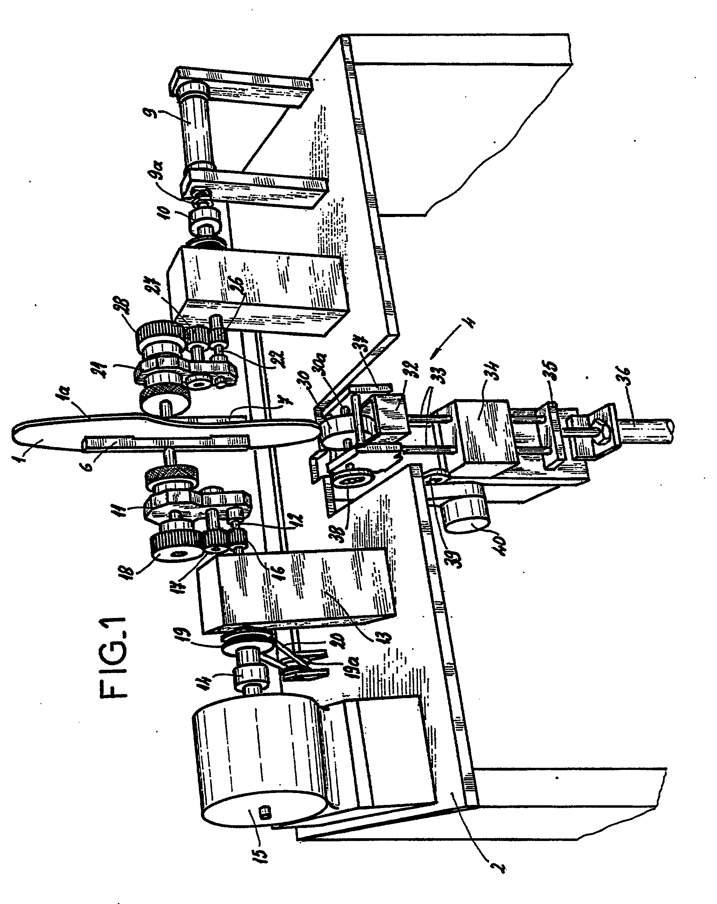

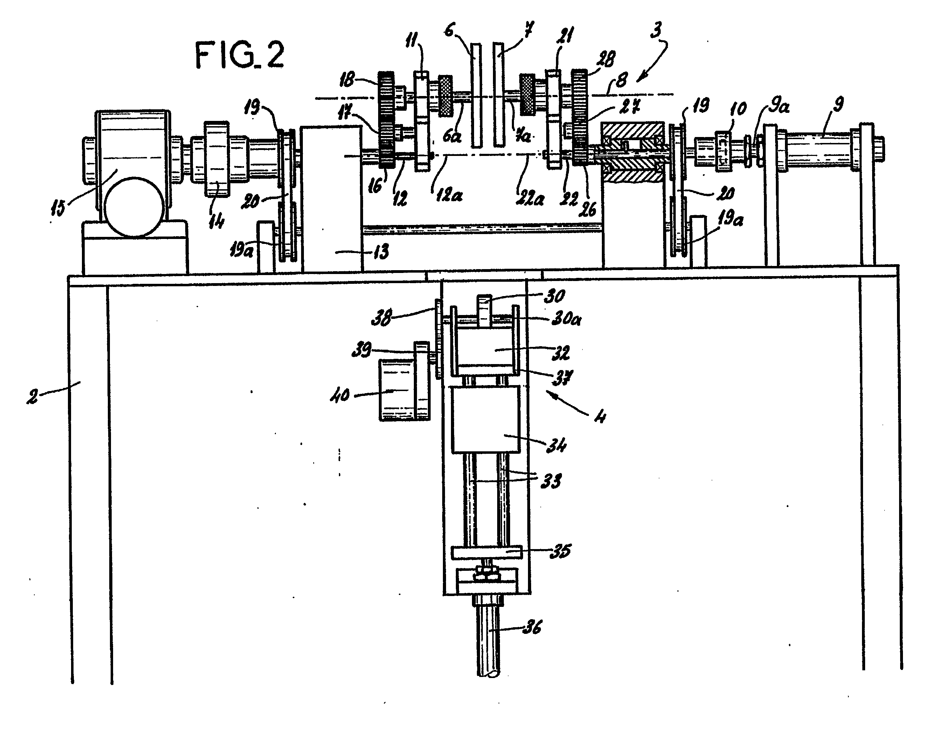

Le chariot 37 est fixé à l'extrémité supérieure de deux colonnes 33 verticales qui coulissent dans un bloc de guidage 34 et qui sont reliées à leurs extrémités inférieures par une barrette 35 sur laquelle est fixée l'extrémité libre de la tige d'un vérin pneumatique 36. Le chariot 37 est apte à être déplacé par le vérin 36, d'une position haute montrée à la figure 1 dans laquelle le rouleau 30 est en contact avec une semelle 1 serrée entre les mors 6, 7, dans une position basse montrée à la figure 2, dans laquelle le rouleau 30 n'est plus en contact avec la semelle 1.

Le rouleau d'encrage 30 est monté rotatif autour de son axe 30a sur le chariot 37. Lorsque ce chariot est en position haute, le rouleau d'encrage tourne librement autour de son axe. Par contre lorsque le chariot 37 est en position basse, le rouleau d'encrage est entraîné en rotation par l'intermédiaire d'une roue de friction 38 fixée à l'extrémité de son axe 30a et coopérant avec une autre roue de friction 39 montée sur l'arbre de sortie d'un petit moteur 40. Cette disposition permet d'avoir une rotation permanente du rouleau d'encrage dans le bac, même lorsque le dispositif d'encrage est abaissé par exemple pour la mise en place d'une nouvelle semelle et est par conséquent inactif, et permet par conséquent d'éviter le séchage de l'encre sur le rouleau lorsque celui-ci n'est pas utilisé.

Une râcle peut être prévue de façon connue en soi à l'intérieur du bac pour régler l'épaisseur du film sur le rouleau encreur.

Bien entendu les roues de friction 38,39 pourraient être remplacées par tout autre moyen d'entraînement débrayable, et par exemple par des pignons dentés.

De même l'un des mors, par exemple le mors 7 pourrait être monté simplement libre en rotation de façon à être entraîné par friction par l'autre mors 6 une fois la semelle serrée entre les deux, ce qui permet de supprimer le système d'entraînement et de poulies lié à ce mors. Dans ce cas le mors 7 devrait avoir une forme avec symétrie de révolution, par exemple circulaire ou un système devrait être prévu pour que le mors 7 soit toujours en phase avec le mors 6.

Le fonctionnement du dispositif est le suivant :

Le dispositif d'encrage 4 étant en position basse, avec son rouleau d'encrage 30 entraîné en rotation par le moteur 40 et tournant dans le bac 32 comme expliqué précédemment, la semelle 1 est mise en place entre les mors 6, 7 et est serrée entre ceux-ci par le déplacement du vérin 9.

Le dispositif d'encrage 4 est alors amené par le vérin 36 dans sa position haute de façon que la lisse la de la semelle 1 soit en contact avec la partie supérieure du rouleau encreur 30.

Simultanément à la montée du dispositif d'encrage 4, le moteur 15 est mis en marche de façon à entraîner la semelle 1 en rotation dans le mouvement de type satellite autour de l'axe 12a, 22a décrit précédemment, c'est-à-dire en rotation sur elle-même autour de l'axe 8, celui-ci effectuant lui-même une rotation autour de l'axe 12a, 22a.

Au cours de ce mouvement la semelle 1 vient constamment en contact avec le rouleau 4 du dispositif d'encrage, en exerçant une certaine pression sur celui-ci, ce qui d'une part provoque la rotation du rouleau 30 dans son bac et d'autre part assure un encrage parfait de la lisse de la semelle.

Le déplacement du vérin 36 est calculé de façon que, dans sa position haute et en l'absence de contact avec la semelle, le rouleau 30 du dispositif d'encrage se trouve sensiblement au-dessus de la zone de contact entre la semelle et ce rouleau, pour la raison suivante :

Les inventeurs ont observé que lorsqu'une semelle était déplacée par rapport à un point fixe (c'est-à-dire le rouleau d'encrage) de façon à se trouver toujours tangente à ce point fixe, son centre de gravité décrivait toujours une courbe plus ou moins circulaire. Or cette courbe était sensiblement identique quel que soit le type de semelle (homme ou femme) et sa pointure.

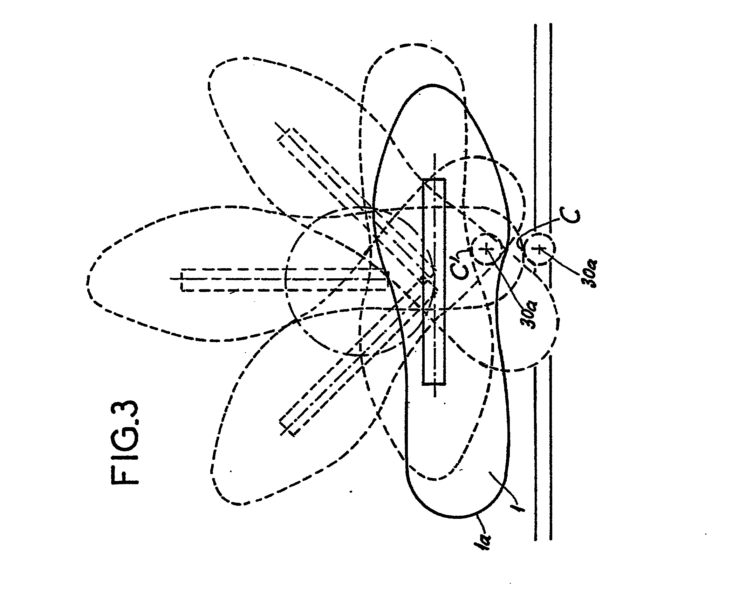

Les inventeurs ont donc approximé cette courbe par un cercle ce qui conduit à communiquer à la semelle le mouvement décrit ci-avant et qui est représenté à la figure 3.

Ainsi que le montre cette figure 3, et du fait de l'approximation réalisée, le point de contact de la semelle avec le rouleau d'encrage n'est plus fixe mais se déplace verticalement (points C, C'), de sorte qu'il est nécessaire d'avoir un déplacement vertical du rouleau d'encrage 30 au cours de la rotation de la semelle 1. Ce problème est résolu par le fait que le rouleau d'encrage 30 est, dans sa position haute, sensiblement à la position haute maximum, montrée en C' sur la figure 3, pour laquelle il y ait contact (c'est-à-dire à cette position ou légèrement au-dessus de celle-ci).

Du fait que le vérin 36 est un vérin pneumatique, la venue en contact de la semelle avec le rouleau encreur 30 provoque un abaissement de ce dernier par compression du fluide contenu dans la chambre du vérin 36. Par contre dès que le point de contact C "remonté", le rouleau 30 remonte également sous l'action du vérin 36, dont le fluide se détend à nouveau, et qui se comporte alors comme un ressort.

De cette façon le rouleau encreur 30 "suit" la semelle tout au long de son déplacement et il y a toujours contact entre ceux-ci.

Ainsi que le montre la figure 3, l'axe de rotation 30a du rouleau est légèrement décalé en arrière par rapport à l'axe de rotation 12a, 22a de la semelle 1 ce qui permet d'éliminer tout risque d'arc-boutement de la semelle 1 sur le rouleau.

Bien entendu cet axe de rotation 30a pourrait être également décalé en avant, le principal étant qu'il ne soit pas sur la même verticale que l'axe de rotation 12a, 22a.

Pour plus de précision l'entraxe 8-12a, 22a devrait être différent pour chaque type de semelle et chaque pointure mais la pratique montre que les variations de cet entraxe sont très faibles d'une semelle à l'autre et que de toute façon elles sont compensées par le déplacement vertical du dispositif d'encrage, de sorte qu'un entraxe fixe peut être prévu pour tous les types de semelles.

On constatera cependant que pour modifier cet entraxe, il suffit de changer les bielles 11, 21 et les engrenages réducteurs 16, 17, 18, 26, 27, 28 et que ce changement est donc très facile à réaliser. Par conséquent il est tout à fait possible de prévoir par exemple deux jeux de bielles et d'engrenages, à savoir par exemple un jeu pour les semelles homme et un jeu pour les semelles femme.

On notera que le rapport des vitesses de rotation de la semelle par rapport aux axes 8 et 12a est de 1/2 et que par conséquent il est nécessaire que la semelle 1 effectue deux rotations par rapport à l'axe 12a, 22a pour que sa lisse soit entièrement colorée. Ce rapport de vitesse permet une bonne coloration pour un temps minimal mais il est bien évident qu'un autre rapport de vitesse pourrait être prévu.

Comme il va de soit la présente invention ne se limite pas au seul exemple de réalisation montré ici à titre d'exemple non limitatif mais en embrasse au contraire toutes les formes de réalisation similaires ou équivalentes.

## Revendications

1. Procédé de coloration de la lisse (1a) de semelles de chaussures (1), du type dans lequel la lisse (1a) de la semelle (1) devant être colorée est amenée en contact avec la surface périphérique d'un rouleau encreur (30), que consistant à entraîner la semelle (1) en rotation autour d'un premier axe (8) passant sensiblement par son centre de gravité, cet axe effectue lui-même un mouvement de raotation par rapport à un second axe (12a, 22a) parallèle à celui-ci, les positions respectives de ces axes (8, 12a, 22a) étant déterminées de façon que le bord de la semelle décrive une trajectoire sensiblement tangente par rapport au rouleau encreur, et à déplacer verticalement le rouleau encreur (30) au cours du déplacement de la semelle (1), de façon à toujours maintenir le contact entre ce rouleau (30) et la lisse (1a) de la semelle (1).

2. Procédé selon la revendication 1, caractérisé en ce que la vitesse de rotation de la semelle (1) autour du premier axe (8) est inférieure à la vitesse de rotation de ce premier axe (8) par rapport au second axe (12a, 22a).

3. Procédé selon la revendication 2, caractérisé en ce que le rapport de vitesse est égal à 1/2.

4. Dispositif pour la mise en œuvre du procédé selon l'une quelconque des revendications 1 à 3, comprend qu'il comprenant un dispositif d'entraînement formé de deux mors (6, 7) montés rotatifs autour d'un axe commun (8), le rouleau d'encrage (30) étant parallèle à celui-ci et ces mors (6, 7) étant aptes à serrer une semelle (1) entre eux, que comprend un rouleau d'encrage (30) d'axe horizontal destiné à entrer en contact avec la lisse (1a) de la semelle lors de la rotation de celle-ci, le rouleau d'encrage (30) étant monté mobile verticalement et soumis à une force élastique tendant à le déplacer vers le haut, de manière à le maintenir en contact avec la lisse de la semelle.

5. Dispositif selon la revendication 4, caractérisé en ce que chaque mors (6, 7) est fixé à l'extrêmité d'une tige (6a, 7a) montée rotative dans une bielle respectivement (11, 21), en ce que chaque bielle (11, 21) est fixée sur un arbre (12, 22) d'axe (12a, 22a), ces arbres (12, 22) étant entraînés en rotation en synchronisme par un même arbre moteur (15), et en ce que chaque tige (6a, 7a) est entraînée en rotation avec un rapport de réduction de 1/2 par l'arbre respectivement (12, 22) de la bielle (11, 21) associée par l'intermédiaire de pignons respectivement (16, 17, 18; 26, 27, 28).

6. Dispositif selon la revendication 5, caractérisé en ce que l'arbre (22) d'entraînement en rotation de l'un (7) des mors est accouplé à l'extrémité de la tige d'un vérin (9) de façon à assurer le serrage d'une semelle (1) entre des deux mors.

7. Dispositif selon la revendication 6, caractérisé en ce que l'arbre (22) est accouplé à la tige de vérin (9) par une butée à billes (10).

8. Dispositif selon l'une des revendications 4 à 7, caractérisé en ce que les déplacements verticaux du rouleau d'ancrage (30) entre une position haute dans laquelle il est apte à entrer en contact avec la semelle au cours du déplacement de celle-là, dans une position basse dans laquelle il est hors de contact avec la semelle sont commandés par un vérin pneumatique (36) sur la tige duquel le rouleau (30) est fixé.

9. Dispositif selon la revendication 6, caractérisé en ce que la position haute du rouleau d'encrage (30) correspond ou se trouve au-dessus de sa position théorique haute maximale pour laquelle il y ait contact avec la semelle (1).

10. Dispositif selon l'une des revendications 8 ou 9, caractérisé en ce que le rouleau d'encrage (30) est monté rotatif autour de son axe (31) et en ce qu'une roue de friction (38) ou similaire est fixée à une extrémité de cet axe (31) cette roue étant apte à entrer en prise avec une autre roue de friction (39) ou similaire montée sur l'arbre d'un moteur (40) lorsque le rouleau (30) est dans sa position basse de façon à entraîner celui-ci en rotation.

11. Dispositif selon l'une quelconque des revendications 4 à 10, caractérisé en ce que l'axe (30a) du rouleau d'encrage (30) est décalé par rapport à l'axe de rotation (12a, 22a) des mors (6, 7).

**Patentansprüche**

1. Verfahren zur Einfärbung der Randkante (1a) von Schuhsohlen (1), bei welchem Verfahren die einzufärbende Randkante (1a) der Schuhsohle (1) in Kontakt mit der Umfangsfläche einer Färbewalze (30) gebracht wird, wobei die Schuhsohle (1) in Rotation um eine erste Achse (8) versetzt wird, welche annähernd durch ihren Flächenschwerpunkt verläuft, dadurch gekennzeichnet, dass diese Achse selbst eine Rotationsbewegung um eine zweite Achse (12a, 22a) ausführt, welche parallel zur ersten Achse ist, wobei die jeweiligen Positionen dieser Achsen (8, 12a, 22a) in der Weise bestimmt sind, daß der Sohlenrand eine bezüglich der Färbewalze im wesentlichen tangentiale Bahn beschreibt und daß die Färbewalze (30) während der Bewegung der Sohle (1) in vertikaler Richtung bewegt wird derart, daß der Kontakt zwischen der Färbewalze (30) und der Randkante (1a) der Sohle (1) ständig aufrecht erhalten wird.

2. Verfahren nach Anspruch 1, dadurch gekennzeichnet, daß die Umlaufgeschwindigkeit der Sohle (1) um die erste Achse (8) geringer ist als die Umlaufgeschwindigkeit der ersten Achse (8) um die zweite Achse (12a, 22a).

3. Verfahren nach Anspruch 2, dadurch gekennzeichnet, daß das Verhältnis der Umlaufgeschwindigkeiten 1:2 ist.

4. Einrichtung zur Durchführung des Verfahrens nach einem der Ansprüche 1 bis 3, umfassend ein Antriebsmittel, welches von zwei Spannbacken (6, 7) gebildet ist, wobei diese Spannbacken (6, 7) drehbar um eine gemeinsame Achse (8) angeordnet sind und wobei die Spannbacken (6, 7) dazu ausgebildet sind, um eine Sohle (1) zwischen sich einzuspannen, dadurch gekennzeichnet, daß sie eine Färbewalze (30) mit horizontaler Achse umfaßt, welche dazu bestimmt ist, in Kontakt mit der Randkante (1a) der Sohle (1) während deren Rotationsbewegungen zu treten, wobei die gemeinsame Achse (8) ihrerseits drehbar um eine zu ihr parallele Achse (12a, 22a) ist und und die Färbewalze (30) vertikal beweglich angeordnet ist und einer elastischen Kraft unterliegt, welche die Färbewalze nach oben zu bewegen sucht derart, daß sie in Kontakt mit der Randkante der Sohle verbleibt.

5. Einrichtung nach Anspruch 4, dadurch gekennzeichnet, daß jede Spannbacke (6, 7) am Ende jeweils einer Stange (6a, 7a) angeordnet ist, daß diese Stangen (6a, 7a) drehbar jeweils in einem Zwischenglied (11, 21) gelagert sind, daß jedes der Zwischenglieder (11, 21) auf einer Welle (12, 22) mit einer Achse (12a bzw. 22a) angeordnet ist, daß diese Wellen (12, 22) synchron durch eine und dieselbe Motorwelle (15) drehend angetrieben sind und daß jede Stange (6a, 7a) drehend angetrieben ist mit einem Untersetzungsverhältnis von 1:2 durch die jeweils zugehörige Welle (12, 22) des zugehörigen Zwischengliedes (11, 21), und zwar vermittels zugehöriger Zahnräder (16, 17, 18; 26 27, 28).

6. Einrichtung nach Anspruch 5, dadurch gekennzeichnet, daß die Drehantriebswelle (22) eines (7) der Spannbacken gekoppelt ist mit dem Ende der Stange eines Kraftgeräts (9) derart, daß die Einklemmung einer Sohle (1) zwischen die beiden Spannbacken gewährleistet ist.

7. Einrichtung nach Anspruch 6, dadurch gekennzeichnet. daß die Welle (22) an die Stange des Kraftgeräts (9) durch ein Druckkugellager (10) angekuppelt ist.

8. Einrichtung nach einem der Ansprüche 4 bis 7, dadurch gekennzeichnet, daß die vertikalen Bewegungen der Färbewalze (30) zwischen einer oberen Position, in welcher sie Kontakt mit der umlaufenden Sohle nehmen kann und einer unteren Position, in welcher sie außer Kontakt mit der Sohle ist, durch ein pneumatisches Kraftgerät (36) gesteuert sind, auf dessen Stange die Färbewalze (30) angebracht ist.

9. Einrichtung nach Anspruch 6, dadurch gekennzeichnet, daß die obere Position der Färbewalze (30) entsprechend oder höher eingestellt ist als die theoretische Höchstposition, in welcher die Färbewalze Kontakt mit der Sohle (1) hat.

10. Einrichtung nach einem der Ansprüche 8 oder 9, dadurch gekennzeichnet, daß die Färbewalze (30) drehbar um ihre Achse (31) ist und daß ein Friktionsrad (38) oder dergleichen auf einem Ende der Färbewalzenachse (31) angeordnet ist, wobei dieses Friktionsrad (38) so angeordnet ist, daß es in Eingriff mit einem weiteren Friktionsrad (39) oder dergleichen treten kann, welches auf der Welle eines Antriebsmotors angeordnet ist, nämlich dann, wenn die Färbewalze (30) in ihrer unteren Position ist, so daß diese dann in Rotation versetzt wird.

11. Einrichtung nach einem der Ansprüche 4 bis 10, dadurch gekennzeichnet, daß die Achse (30a) der Färbewalze (30) gegenüber der Drehachse (12a, 22a) der Spannbacken (6, 7) versetzt ist.

**Claims**

1. A colouring process for the edge (1a) of soles

of shoes (1), of the type in which the edge (1a) of the sole (1) that it is desired to colour is brought into contact with the peripheral surface of an inking roller (30), consisting in making the sole (1) rotate around a first axis (8) that passes through its approximate center of gravitiy, characterized in that this axis itself executes a rotational movement with reference to a second axis (12a, 22a) parallel to the first, the respective positions of these axes (8, 12a, 22a) being so determined that the edge of the sole describes a trajectory that is approximately tangential in relation to the inking roller (30), and in moving the inking roller (30) vertically during the movement of the sole (1) in such a way that contact is always maintained between the roller (30) and the edge (1a) of the sole.

2. A process according to claim 1, characterized in that the speed of rotation of the sole (1) around the first axis (8) is less than the speed of rotation of this first axis (8) relatively to the second axis (12a, 22a).

3. A process according to claim 2, characterized in that the speed ratio is equal to 1/2.

4. An appliance to operate the process according to any of claims 1 to 3, comprising a driving appliance formed by two clamps (6, 7) mounted rotatably about a common axis (8), these clamps (6, 7) being suitable to grip a sole (1) between themselves and this axis being itself rotatable around an axis (12a, 22a) parallel thereto, characterized in that it comprises a horizontal axis inking roller (30) intended to come into contact with the edge (1a) of the sole during rotation of the latter, the inking roller (30) being movably mounted vertically and subject to an elastic force tending to displace it upwards, so as to keep it in contact with the edge of the sole.

5. An appliance according to claim 4, characterized in that each clamp (6, 7) is fixed to the end of a rod (6a, 7a) rotatably mounted in a link (11, 21 respectively), in that each link (11, 21) is fixed on a shaft (12, 22) with axis (12a, 22a), these shafts (12, 22) being synchronously driven in rotation by a single shaft motor (15), and in that each rod (6a, 7a) is driven in rotation with a reduction ratio of 1/2 by the respective shaft (12, 22) of the associated link (11, 21) by the intermediary of gear wheels (16, 17, 18; 26, 27, 28) respectively.

6. An appliance according to claim 5, characterized in that the shaft (22) that drives one of the clamps (7) in rotation is coupled to the end of the rod of a jack (9) so as to ensure that a sole (1) is gripped between the two clamps.

7. An appliance according to claim 6, characterized in that the shaft (22) is coupled to the rod of the jack (9) by a ball bearing (10).

8. An appliance according to one of claims 4 to 7, characterized in that the vertical displacements of the inking roller (30) between a high position in which it is able to come into contact with the sole during the movement of the latter, into a low position in which it is out of contact with the sole is controlled by a pneumatic jack (36) onto the rod of which the roller (30) is set.

9. An appliance according to claim 6, characterized in that the high position of the inking roller (30) corresponds to or is above its theoretical maximum high position at which it should have contact with the sole (1).

10. An appliance according to one of claims 8 or 9, characterized in that the inking roller (30) is rotatably mounted on its axle (31) and that a friction wheel (38) or the like is fixed to one end of this axle (31), this wheel being able to grip against another friction wheel (39) or the like mounted on the shaft of a motor (40), when the roller (30) is in its low position, in such a way as to make the latter rotate.

11. An appliance according to any one of claims 4 to 10, characterized in that the axis (30a) of the inking roller (30) is displaced relatively to the rotational axis (12a, 22a) of the clamps (6, 7).

FIG_1

FIG_2

EP 0 238 424 B1

FIG.3